# DEMANDE DE BREVET EUROPEEN

(11) **EP 2 357 370 A1**
(43) Date de publication de la demande: **17.08.2011**
(21) Numéro de dépôt: 11305093.4
(22) Date de dépôt: 31.01.2011
(51) Int. Cl.: F16B 41/00

(54) **Dispositif de fixation antivol de solidarisation d'une roue sur le moyeu d'un véhicule automobile**

(30) Priorité: 03.02.2010 FR 1050741
(71) Demandeur: Société des Forges de Froncles (Société par actions simplifiée), 52320 Froncles (FR)
(72) Inventeur: Froeliger, Alain, F-52320, FRONCLES (FR)
(74) Mandataire: Rhein, Alain

(57) **Abrégé**

Dispositif de fixation antivol de solidarisation d'une roue sur le moyeu d'un véhicule automobile, comportant une partie proximale d'entraînement (4) qui permet la transmission d'un couple de serrage ou de desserrage au travers d'une clé, et qui comporte un téton cylindrique s'étendant dans une direction axiale, comprenant sur sa longueur plusieurs des niveaux distincts (6, 7, 8), au moins trois, à savoir un premier niveau (6) à la base dudit téton (4) ou non loin de celle-ci, comprenant périphériquement des empreintes femelles (60) qui permettent une coopération avec les empreintes mâles correspondantes de la clé, un deuxième niveau (7), médian, dont le profil ne lui permet pas de coopération avec les empreintes mâles de la clé, et un troisième niveau (8), comprenant périphériquement des empreintes (84) susceptibles de permettre le passage des empreintes mâles et portées par un élément (80) susceptible de pivoter axialement sur le téton (4).

## Description

La présente invention a pour objet un dispositif de fixation antivol de solidarisation d'une roue sur le moyeu d'un véhicule automobile, comportant une partie filetée, une partie de maintien destinée à venir se plaquer contre la roue à fixer, et une partie d'entraînement, et qui permet la transmission à ladite partie filetée d'un couple de serrage ou de desserrage au travers d'une clé ou analogue, l'accouplement de la clé ou analogue avec ladite partie d'entraînement étant réalisé au travers d'empreintes concordantes que comportent d'une part ladite partie d'entraînement et d'autre part ladite clé ou analogue, les caractéristiques de forme, de dimensions et de positionnement desdites empreintes constituant un code.

De manière habituelle la roue d'un véhicule automobile est fixée au moyen de vis dont la tête, qui permet la transmission du couple de serrage ou de desserrage, est de forme hexagonale.

Afin d'éviter qu'un tiers puisse enlever frauduleusement les roues, il est très fréquent que pour chacune des roues, qu'au moins l'une des vis de fixation présente une tête qui nécessite une clef particulière pour pouvoir être manoeuvrée.

On connaît ainsi de nombreux dispositifs de vis ou analogue munis de moyens de codage, comme par exemple ceux décrits dans les documents GB 2.006.371, FR 2.359.730 et FR 2.567.215 et WO 03/081057. Ces dispositifs comprennent d'une part une vis dont la tête présente soit des encoches périphériques et/ou faciales arrangées angulairement de manière irrégulière, et d'autre part une clef de type douille, munie de pions ou doigts disposés selon le même arrangement et destinés à coopérer avec lesdites encoches en vue de réaliser l'accouplement susceptible de permettre le transfert de couple.

L'inviolabilité de ces dispositifs est accrue lorsque la jante de la roue est munie de puits étroits et profonds destinés à l'enfouissement des têtes de vis, interdisant leur préhension par une approche latérale au moyen d'un outil de serrage. Dans ce cas de figure, les tentatives frauduleuses contre ces dispositifs sont pratiquées en force, soit par une attaque axiale et légèrement de biais avec un burin, soit en utilisant une clé présentant un autre code, ou une partie du code, et en la matriçant axialement contre la tête codée.

La présente Demanderesse a déjà proposé dans le document WO200913862 un dispositif de fixation antivol de solidarisation d'une roue sur le moyeu d'un véhicule automobile permettant de pallier les inconvénients précités.

La présente invention a pour but de proposer une solution alternative, qui en outre interdit une attaque latérale lorsque le dispositif de fixation n'est pas ou peu enfoui dans un puits.

Le dispositif de fixation antivol de solidarisation d'une roue sur le moyeu d'un véhicule automobile selon l'invention comporte une partie distale filetée, une partie de maintien destinée à venir se plaquer contre la roue à fixer, et une partie proximale d'entraînement qui permet la transmission à ladite partie filetée d'un couple de serrage ou de desserrage au travers d'une clé ou analogue, l'accouplement de la clé ou analogue avec ladite partie d'entraînement étant réalisé au travers d'empreintes concordantes, à savoir des empreintes femelles que comporte ladite partie d'entraînement et des empreintes mâles que comporte ladite clé ou analogue, les caractéristiques de forme, de dimensions et de positionnement desdites empreintes constituant un code, et il se caractérise essentiellement en ce que la ladite partie d'entraînement comporte un téton cylindrique s'étendant dans une direction axiale, comprenant sur sa longueur plusieurs des niveaux distincts, au moins trois, à savoir un premier niveau, à la base dudit téton ou non loin de celle-ci, comprenant périphériquement lesdites empreintes femelles qui permettent une coopération avec les empreintes mâles correspondantes de ladite clé ou analogue en vue de la transmission d'un couple de serrage ou de desserrage, un deuxième niveau, médian, dont le profil ne lui permet pas de coopération avec les empreintes mâles de ladite clé, et un troisième niveau, en extrémité dudit téton ou à proximité de celle-ci, comprenant périphériquement des empreintes susceptibles de permettre le passage des empreintes mâles de ladite clé ou analogue lorsque celle-ci est engagée sur ledit téton, les empreintes dudit troisième niveau étant portées par un élément susceptible de pivoter axialement sur ledit téton.

On comprendra que les empreintes femelles du niveau extrême, du fait de la mobilité en pivotement axial de l'élément qui les porte, ne permettent pas la transmission d'un couple de desserrage, que ce soit dans une approche de biais, ou dans une approche axiale au moyen d'une douille ou analogue enfoncée à force et matricée.

Selon une caractéristique additionnelle du dispositif de fixation antivol selon l'invention, il comporte un manchon engagé coaxialement sur le téton, et entourant celui-ci, serti à force sur la partie de maintien avec possibilité de pivoter axialement sur celle-ci, et de dimensions internes autorisant la création entre elle et ledit téton, d'un espace suffisant à permettre le passage de la clé ou analogue comprenant les empreintes mâles.

Lors d'une approche latérale au moyen d'un outil de serrage, que la jante comporte ou non des puits permettant un enfouissement total ou partiel, la partie de maintien, protégée par le manchon, demeure inaccessible.

Selon une autre caractéristique additionnelle du dispositif de fixation antivol selon l'invention, l'élément mobile du troisième niveau comprend d'une part un plot destiné à être serti en force dans un canal axial pratiqué dans l'extrémité du téton cylindrique, et d'autre part un disque coaxial comportant en périphérie les empreintes.

Selon une autre caractéristique additionnelle du dispositif de fixation antivol selon l'invention, le deuxième niveau, médian, dont le profil ne lui permet pas de coopération avec les empreintes mâles de la clé ou analogue, comporte de plus au moins une collerette périphérique d'un diamètre externe supérieur à celui du cercle contenant les extrémité libres des empreintes mâles de la clé, et dans laquelle sont pratiquées des empreintes femelles autorisant le passage desdites empreintes mâles lorsque la clé est engagée sur le téton, l'ensemble desdites empreintes femelles étant décalé angulairement par rapport à celui des empreintes femelles du premier niveau, tandis que la longueur de chacune des parties dudit deuxième niveau, qui séparent d'une part ledit premier niveau de ladite collerette, et d'autre part cette dernière du troisième niveau, est au moins égale à la longueur de chacune des empreintes mâles de ladite clé ou analogue.

On comprendra que pour atteindre les empreintes femelles du premier niveau, les seules qui permettent la transmission d'un couple de serrage ou de desserrage, il est nécessaire que l'ensemble des empreintes mâles de la clé, pour franchir l'obstacle que constitue la collerette après avoir franchi le troisième niveau, soit décalé angulairement par pivotement axial, en sorte que lesdites empreintes mâles soient au droit des empreintes femelles de ladite collerette, ce qui est réalisé dans la partie du deuxième niveau qui sépare le troisième niveau et de ladite collerette, sachant qu'après franchissement de la collerette une seconde opération de pivotement axial est nécessaire pour placer lesdites empreintes mâles au droit des empreintes femelles du premier niveau, cette seconde opération de pivotement axial de l'ensemble des empreintes mâles de la clé étant réalisé dans la partie du deuxième niveau qui sépare ladite collerette du premier niveau.

Les avantages et les caractéristiques du dispositif de fixation antivol selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective d'un dispositif de fixation antivol selon l'invention.
- la figure 2 représente une vue schématique en perspective et en éclaté, d'une variante du même dispositif.
- la figure 3 représente une vue schématique en coupe selon un plan longitudinal médian du même dispositif.
- la figure 4 représente une vue schématique en perspective d'un outil permettant de manoeuvrer le dispositif selon l'invention.

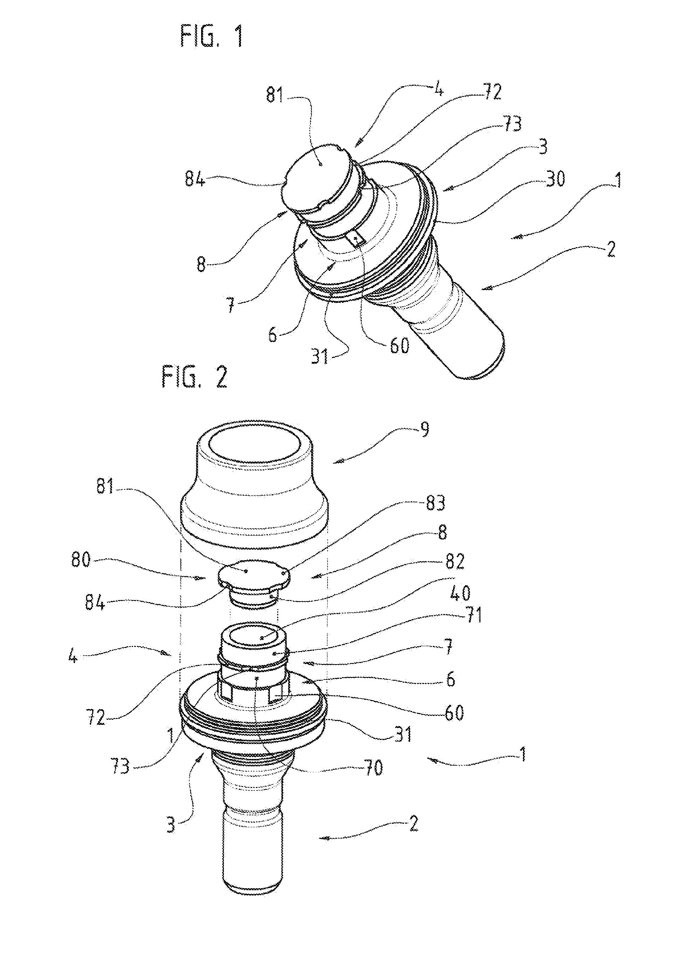

En référence à la figure 1, on peut voir un dispositif de fixation antivol 1 selon l'invention, destiné à être utilisé pour la solidarisation d'une roue sur le moyeu d'un véhicule automobile.

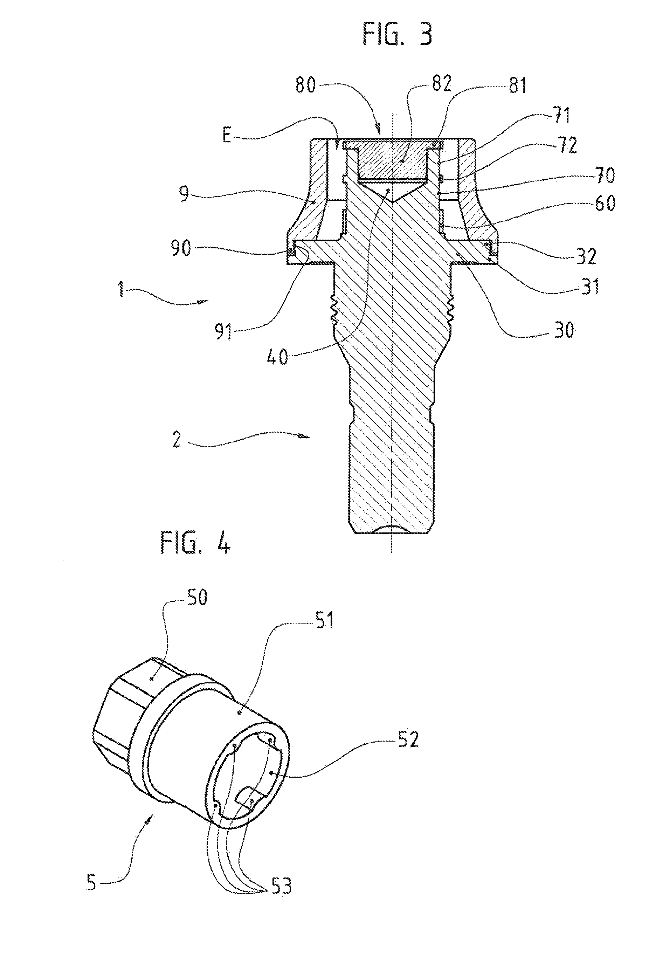

Ce dispositif 1 comprend essentiellement trois parties, une partie distale 2 filetée destinée à être vissée dans le moyeu, une partie médiane 3 de maintien destinée à venir se plaquer contre l'objet à fixer et se présentant sous la forme d'un disque 30, de profil adapté à la zone contre laquelle il doit venir en appui, et une partie proximale d'entraînement 4, qui permet la transmission à ladite partie filetée d'un couple de serrage ou de desserrage au travers d'une clé 5 représentée sur la figure 4.

Cette clé 5 se présente sous la forme d'un embout dont une extrémité 50 est conformée pour permettre son adaptation à un outil, en l'occurrence cette extrémité est, non limitativement, de forme hexagonale, et dont l'autre extrémité consiste en un manchon cylindrique 51, dont la paroi intérieure 52 est munie de bossages 53, en l'occurrence quatre, répartis périphériquement.

La variation du nombre, des dimensions et des emplacements des bossages 53 offre un nombre varié de combinaisons, en sorte de constituer un code.

Comme cela est visible sur les figures 1 et 2, la partie proximale d'entraînement 4 se présente sous la forme générale d'un téton cylindrique, lequel comprend trois niveaux, à savoir un premier niveau 6 situé à sa base, à proximité de la partie médiane 3 de maintien, un deuxième niveau médian 7, et un troisième niveau 8 en extrémité.

Le premier niveau 6 comporte en périphérie des encoches 60, qui constituent des empreintes femelles concordantes avec les bossages 53 de la clé 5, et qui sont aptes à permettre la transmission d'un couple de serrage ou de desserrage au dispositif 1, exercé par un outil au travers de la clé 5.

Le deuxième niveau 7, est d'un diamètre inférieur ou égal à celui du cercle joignant les fonds des encoches 60, ou bien de manière équivalente à celui du cercle joignant les sommets des bossages 53, en sorte que ces derniers, lorsqu'ils sont au droit de ce deuxième niveau 7, ne soient pas en mesure de transmettre un couple au dispositif 1.

Le troisième niveau 8, est constitué, comme cela est plus particulièrement visible sur la figure 2, d'un élément 80 comprenant d'une part un plot 81 destiné à être serti en force dans un canal axial 40 pratiqué dans l'extrémité du téton cylindrique 4, et d'autre part disque coaxial 82 d'un diamètre identique à celui du premier niveau 7, et dans le bord 83 duquel sont pratiquées des encoches 84 dont les dimensions, le nombre et l'emplacement concordent avec les bossages 53.

Ainsi, l'engagement de la clé 5 sur le téton 4, n'est possible qu'en faisant coïncider les bossages 53 avec les encoches 84.

Du fait de son mode de solidarisation au téton 4, l'élément 80 est mobile en pivotement axial, en sorte qu'il ne peut pas permettre la transmission d'un couple de desserrage.

Il pourrait être possible, avec un matériel adapté, de matricer une douille sur le téton 4, en sorte que ce dernier soit conformer intérieurement, au travers du passage sur les encoches 84, pour pouvoir coopérer avec les encoches 60, avec toutefois la difficulté de pourvoir être enfoncée suffisamment profondément pour atteindre les encoches 60.

Afin de pallier cet éventuel inconvénient, le deuxième niveau 7 est divisé en deux parties 70 et 71, par une collerette périphérique 72 qui en fait saillie, et dans laquelle sont pratiquées des encoches 73, agencées pour permettre le passage des bossages 53 lors de l'engagement de la clé 5.

Les encoches 73 sont décalées angulairement par rapport aux encoches 60, tandis que d'une part les bossages 53 de la clé ont une longueur définie, et que d'autre part, la partie 70 qui sépare le premier niveau 6 de la collerette 72, est d'une longueur supérieure à la plus grande longueur des bossages 53, de manière qu'après franchissement de la collerette 72, les bossages 53 puissent être déplacés angulairement afin de se trouver au droit des encoches 60.

Les encoches 84 du troisième niveau 8 n'étant pas nécessairement alignées avec les encoches 73, la partie 71 du deuxième niveau 7 qui sépare le disque 81 de la collerette 72, est également d'une longueur supérieure à la plus grande longueur des bossages 53, de manière qu'après franchissement du disque 81, les bossages 53 puissent être déplacés angulairement afin de se trouver au droit des encoches 73.

Lors d'une tentative de matriçage d'une douille, si il est possible de lui faire franchir le troisième niveau 8, de la faire pivoter pour franchir la collerette 72, il est par contre impossible de l'engager sur les encoches 60.

On notera que la collerette 72 est de faible épaisseur, de manière à ne pas permettre un accrochage suffisant à la transmission d'un couple de desserrage.

On notera également que selon des variantes, non représentées, le troisième niveau 8 pourrait être constitué soit d'un élément fixe, mais d'un faible épaisseur, en sorte de ne pas pouvoir permettre la transmission d'un couple de desserrage tout en étant suffisante à empêcher le passage d'une clé non adaptée, soit d'une collerette fixe ou mobile, positionnée à faible distance de l'extrémité libre du téton 4.

En référence aux figures 2 et 3, on peut voir que le dispositif 1 comporte de plus une bague 9, se présentant sous la forme d'un manchon engagé coaxialement au téton cylindrique 4, et solidarisé à la partie de maintien 3 par sertissage.

A cet effet, la bague 9 comporte sur son bord à sertir 90, une rainure périphérique interne 91 de profil rétenteur, tandis que le bord périphérique 31 du disque 3 comporte un bourrelet 32 destiné à coopérer avec la rainure 91.

La bague 9 est d'une longueur de préférence égale ou supérieure à celle du téton 4, et elle délimite avec ce dernier un espace E suffisant à permettre le passage de la clé 5.

On comprendra que la bague 9 interdit que l'on puisse se saisir du téton 4 au moyen d'un outil de serrage, tandis que le saisissement de la bague 9 au moyen d'un tel outil en vue d'exercer sur celle-ci un couple en rotation, ne peut conduire, du fait de la solidarisation de la bague 9 par sertissage, qu'à la mise en rotation de la bague 9 sur le disque 30.

## Revendications

1. Dispositif de fixation antivol de solidarisation d'une roue sur le moyeu d'un véhicule automobile, comportant une partie distale filetée (2), une partie de maintien (3) destinée à venir se plaquer contre la roue à fixer, et une partie proximale d'entraînement (4) qui permet la transmission à ladite partie filetée (2) d'un couple de serrage ou de desserrage au travers d'une clé ou analogue (5), l'accouplement de la clé ou analogue (5) avec ladite partie d'entraînement (4) étant réalisé au travers d'empreintes concordantes (60), à savoir des empreintes femelles que comporte ladite partie d'entraînement (4) et des empreintes mâles (53) que comporte ladite clé ou analogue (5), les caractéristiques de forme, de dimensions et de positionnement desdites empreintes (60, 53) constituant un code, **caractérisé en ce que** la ladite partie d'entraînement (4) comporte un téton cylindrique s'étendant dans une direction axiale, comprenant sur sa longueur plusieurs des niveaux distincts (6, 7, 8), au moins trois, à savoir un premier niveau (6), à la base dudit téton (4) ou non loin de celle-ci, comprenant périphériquement lesdites empreintes femelles (60) qui permettent une coopération avec les empreintes mâles (53) correspondantes de ladite clé ou analogue (5) en vue de la transmission d'un couple de serrage ou de desserrage, un deuxième niveau (7), médian, dont le profil ne lui permet pas de coopération avec les empreintes mâles (53) de ladite clé (5), et un troisième niveau (8), en extrémité dudit téton (4) ou à proximité de celle-ci, comprenant périphériquement des empreintes (84) susceptibles de permettre le passage des empreintes mâles (53) de ladite clé ou analogue (5) lorsque celle-ci est engagée sur ledit téton (4), les empreintes (84) dudit troisième niveau (8) étant portées par un élément (80) susceptible de pivoter axialement sur ledit téton (4).

2. Dispositif de fixation antivol selon la revendication 1, **caractérisé en ce qu'**il comporte un manchon (9) engagé coaxialement sur le téton (4), et entourant celui-ci, serti à force sur la partie de maintien (3) avec possibilité de pivoter axialement sur celle-ci, et de dimensions internes autorisant la création entre elle et ledit téton (4), d'un espace (E) suffisant à permettre le passage de la clé ou analogue (5) comprenant les empreintes mâles (53).

3. Dispositif de fixation antivol selon la revendication 1 ou la revendication 2, **caractérisé en ce que** l'élément mobile (80) du troisième niveau (8) comprend d'une part un plot (82) destiné à être serti en force dans un canal axial (40) pratiqué dans l'extrémité du téton cylindrique (4), et d'autre part un disque coaxial (81) comportant en périphérie les empreintes (84).

4. Dispositif de fixation antivol selon l'une quelconque des revendications précédentes, **caractérisé en ce que** le deuxième niveau (7), médian, dont le profil ne lui permet pas de coopération avec les empreintes mâles (53) de la clé ou analogue (5), comporte de plus au moins une collerette périphérique (72) d'un diamètre externe supérieur à celui du cercle contenant les extrémité libres des empreintes mâles (53) de la clé (5), et dans laquelle sont pratiquées des empreintes femelles (73) autorisant le passage desdites empreintes mâles (53) lorsque la clé ou analogue (5) est engagée sur le téton (4), l'ensemble desdites empreintes femelles (73) étant décalé angulairement par rapport à celui des empreintes femelles (60) du premier niveau (6), tandis que la longueur de chacune des parties (70, 71) dudit deuxième niveau (7), qui séparent d'une part ledit premier niveau (6) de ladite collerette (72), et d'autre part cette dernière du troisième niveau (8), est au moins égale à la longueur de chacune des empreintes mâles (53) de ladite clé ou analogue (5).
